# FASCICULE DE BREVET EUROPEEN

(11) **EP 0 591 047 B1**
(45) Date de publication et mention de la délivrance du brevet: **23.08.1995**
(21) Numéro de dépôt: 93402373.0
(22) Date de dépôt: 29.09.1993
(51) Int. Cl.: F25D 3/12

(54) **Conteneur isotherme, notamment pour le transport de produits frais ou surgelés**
Isothermischer Behälter, insbesondere für den Transport von frischen oder tiefgefrorenen Waren
Isothermal container, particularly for the transport of fresh or frozen products

(30) Priorité: 29.09.1992 FR 9211582
(43) Date de publication de la demande: 06.04.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gibot, Claude, F-92240 Malakoff (FR)
(74) Mandataire: Mercey, Fiona Susan

(56) Documents cités:
- EP-A- 0 066 547
- EP-A- 0 337 860
- FR-A- 1 394 113
- FR-A- 2 178 437
- FR-A- 2 188 122
- FR-A- 2 416 434
- US-A- 2 382 859
- US-A- 2 632 311

## Description

La présente invention concerne un conteneur isotherme, plus particulièrement destiné au transport de produits frais ou surgelés, du type comportant un boîtier à parois isothermes définissant un volume intérieur divisé, par un écran en matériau thermiquement isolant, en une chambre supérieure, recevant un réservoir de produit réfrigérant, et une chambre inférieure recevant un chargement, les chambres inférieure et supérieure communiquant l'une avec l'autre par un passage ménagé tout autour de l'écran.

Un conteneur de ce type est décrit dans le document EP-A-337.860, au nom de la Demanderesse.

Avec un tel type de conteneur, utilisant typiquement comme produit réfrigérant du CO₂ en phase solide (glace ou neige carbonique), les entrées de chaleur, à travers le calorifugeage du boîtier isotherme, sont compensées par la sublimation de la glace carbonique libérant des gaz froids. L'écran permet d'isoler dans une large mesure la partie supérieure du chargement dans la chambre inférieure de la source froide et de favoriser une circulation de gaz froid à la périphérie d'au moins la partie supérieure de la chambre inférieure. Dans la pratique, le chargement ne doit en aucun cas toucher ou affleurer l'écran thermique et il faut prévoir un jeu, typiquement d'au moins 2 cm, entre l'écran et l'extrémité supérieure du chargement dans la chambre inférieure. Cet espacement favorise toutefois une circulation de gaz froid immédiatement au-dessous de l'écran thermique, ce qui affecte les conditions de convection naturelle des gaz froids dans la chambre inférieure.

La présente invention a pour objet de proposer un perfectionnement au conteneur sus-mentionné permettant de garantir de façon simple et fiable, une circulation des gaz froids par convection naturelle autour et en- dessous du chargement disposé dans la chambre inférieure.

Pour ce faire, selon l'invention, le conteneur comporte une structure de voile souple s'étendant vers le bas, dans la chambre inférieure, depuis la périphérie de l'écran.

Selon des modes particuliers de réalisation de l'invention :
- l'écran est constitué d'une structure de plaque supportée, par sa face supérieure, dans la chambre supérieure et la structure de voile, avantageusement constituée par une pluralité de bandes verticales en matériau plastique, est fixée, par sa partie supérieure, sur les bords de la structure de plaque ;
- chaque paroi interne de la chambre inférieure comporte une série de tasseaux parallèles ménageant entre eux des passages de circulation de gaz, les tasseaux étant avantageusement formés d'une seule pièce, en matériau plastique, avec la paroi interne.

D'autres avantages de la présente invention ressortiront de la description suivante de modes de réalisation, donnée à titre illustratif mais nullement limitatif, faite en relation avec les dessins annexés, sur lesquels :
- la figure 1 est une vue schématique en coupe verticale d'un conteneur selon l'invention ; et
- la figure 2 est un écorché en perspective montrant les principaux éléments disposés dans les chambres supérieure et inférieure du conteneur de la figure 1.

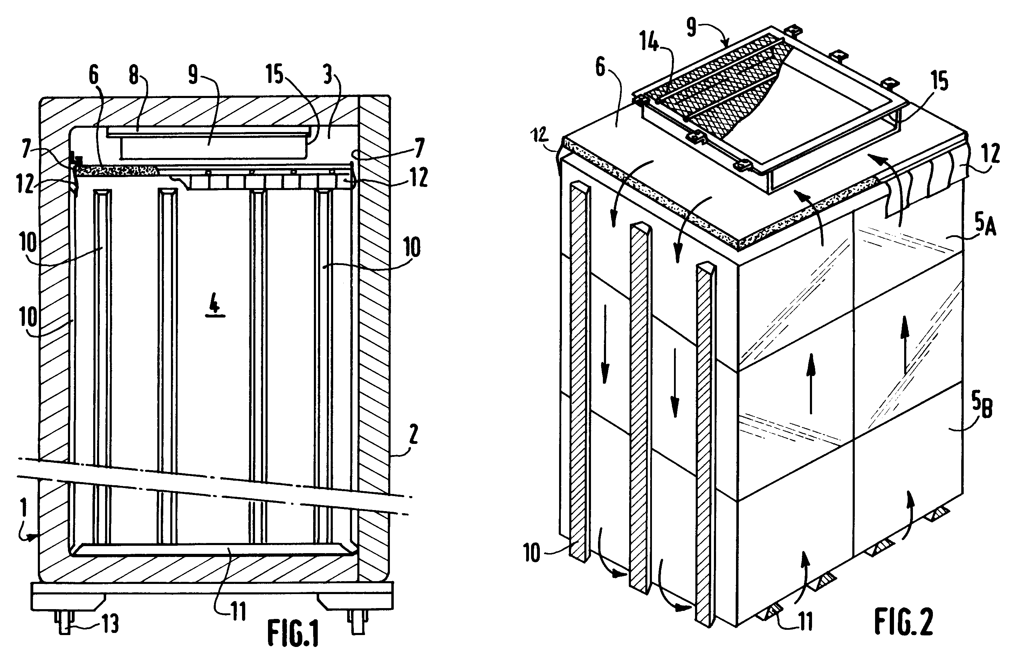

Sur la figure 1 on reconnaît un conteneur isotherme comportant une structure de boîtier à parois isothermes 1 obturable, sur une face, par une porte 2, également en matériau isotherme, et définissant un volume intérieur divisé en une chambre supérieure de petites dimensions 3, destiné à loger un produit réfrigérant et une chambre inférieure de grandes dimensions 4, destinée à recevoir un chargement 5A, 5B (figure 2). Les chambres 3 et 4 sont séparées l'une de l'autre par un écran thermique 6 (une structure de plaque horizontale) en matériau(x) isolant(s), typiquement en PVC expansé, calandré et stabilisé aux ultra-violets. Pour le transport de produits surgelés, on prévoira un montage amovible de l'écran thermique 6, de dimensions transversales inférieures aux dimensions transversales correspondantes du volume intérieur du conteneur 1 de façon à ménager, tout autour de sa périphérie, un passage 7 établissant une libre communication entre les chambres 3 et 4. La structure de plaque 6 est supportée, par sa face supérieure, dans la chambre supérieure de façon que ses bords périphériques délimitent intérieurement le passage 7. Dans la chambre supérieure 3 est disposé, typiquement suspendu à des glissières supérieures 8, à distance de la face supérieure de la structure de plaque 6, un réservoir ou bac en forme de tiroir 9 destiné à contenir un réfrigérant, typiquement une masse de neige carbonique.

Chaque paroi verticale (à l'exception éventuellement de la porte 2) de la chambre inférieure 4 est munie d'une série de tasseaux verticaux 10, la paroi de fond étant, de la même façon, munie d'une série de tasseaux horizontaux 11, de façon à garantir tout autour d'un chargement, même complet, 5A, 5B, dans la chambre 4, des passages de circulation de gaz, comme représenté par les flèches sur la figure 2. De plus, tout autour de la structure de plaque 6 est disposée une structure de voile souple 12 s'étendant vers le bas, dans la chambre inférieure 4, sur une distance de l'ordre du 1/10ème de la hauteur totale de la chambre inférieure 4, typiquement de l'ordre de 100 à 200 mm, de façon à forcer la circulation de gaz de et vers les passages entre les tasseaux 10, 11, à passer dans le passage périphérique 7, en évitant les passages de gaz le long de la face inférieure de l'écran thermique 6 et directement le long de la partie supérieure du chargement 5A.

Dans le mode de réalisation représenté, la structure de voile 12 est constituée d'une pluralité de bandes verticales se chevauchant partiellement et fixées par leur extrémité supérieure sur les bords de la structure de plaque 6. La structure de voile 12 est avantageusement réalisée en matériau plastique, typiquement en PVC souple et transparent, pour contact alimentaire.

Dans un mode de réalisation avantageux, les parois internes de la structure de boîtier 1 sont réalisées en matériau plastique, typiquement en polyéthylène, et les tasseaux 10 et 11 sont formés d'une seule pièce, par moulage, avec ces parois internes. Le conteneur 1 est de plus avantageusement pourvu, à sa base, de roulettes de déplacement 13.

Selon un mode particulier de réalisation de l'invention, comme on le voit mieux sur la figure 2, le réservoir 9, typiquement en acier inoxydable, se présente sous la forme d'un tiroir avec sa face ouverte supérieure munie d'une grille 14, permettant le dégagement du gaz carbonique libéré par la glace carbonique, et sa face avant 15, en vis-à-vis de la porte 2, est ouverte pour permettre le chargement, notamment par injection, de gaz carbonique dans le réservoir 9.

Quoique la présente invention ait été décrite en relation avec des modes de réalisation particuliers, elle est susceptible de modifications et de variantes. En particulier, pour le transport de produits surgelés, on prévoira un montage amovible de l'écran thermique 6.

## Revendications

1. Conteneur isotherme, comportant un boîtier à parois isothermes (1) définissant un volume intérieur divisé, par un écran (6) en matériau thermiquement isolant, en une chambre supérieure (3), recevant un réservoir de produit réfrigérant (9), et une chambre inférieure (4), recevant un chargement (5A, 5B), les chambres inférieure (4) et supérieure (3) communiquant l'une avec l'autre par un passage (7) ménagé tout autour de l'écran (6), caractérisé en ce qu'il comporte une structure de voile souple (12) s'étendant vers le bas, dans la chambre inférieure (4) depuis la périphérie de l'écran (6).

2. Conteneur selon la revendication 1, caractérisé en ce que l'écran (6) est une structure de plaque supportée, par sa face supérieure, dans la chambre supérieure (3) et en ce que la structure de voile (12) est fixée, par sa partie supérieure, sur les bords de la structure de plaque (6).

3. Conteneur selon l'une des revendications 1 et 2, caractérisé en ce que la structure de voile (12) est constituée par une pluralité de bandes verticales en matériau plastique.

4. Conteneur selon l'une des revendications précédentes, caractérisé en ce que les parois internes de la chambre inférieure (4) comportent une série de tasseaux parallèles (10 ; 11) ménageant entre eux des passages de circulation de gaz.

5. Conteneur selon la revendication 4, caractérisé en ce que les tasseaux (10 ; 11) sont formés d'une seule pièce avec la paroi interne correspondante.

6. Conteneur selon la revendication 5, caractérisé en ce que les parois internes sont en polyéthylène.

7. Conteneur selon l'une des revendications précédentes, caractérisé en ce que le réservoir (9) est constitué d'un bac en métal suspendu dans la chambre supérieure (3) et dont la face supérieure, ouverte, est munie d'une grille (14).

8. Conteneur selon la revendication 7, caractérisé en ce que le bac (9) comporte une face latérale ouverte (15) pour le chargement de produit réfrigérant.

9. Conteneur selon l'une des revendications précédentes, caractérisé en ce que le produit réfrigérant est de la neige carbonique.

## Claims

1. Isothermal container having a case with isothermal walls (1) defining an inner volume divided, by a screen (6) made of a heat-insulating material, into an upper chamber (3), receiving a reservoir of refrigerant (9), and a lower chamber (4) receiving a load (5A, 5B), the lower (4) and upper (3) chambers communicating with each other via a passage (7) formed all around the screen (6), characterised in that it has a flexible curtain structure (12) extending downwards into the lower chamber (4) from the periphery of the screen (6).

2. Container according to Claim 1, characterised in that the screen (6) is a plate structure supported, by its top face, in the upper chamber (3) and in that the curtain structure (12) is fixed, by its top part, to the edges of the plate structure (6).

3. Container according to one of Claims 1 and 2, characterised in that the curtain structure (12) is formed by a plurality of vertical strips of plastic material.

4. Container according to one of the preceding claims, characterised in that the internal walls of the lower chamber (4) include a series of parallel battens (10; 11) forming gas circulation passages between them.

5. Container according to Claim 4, characterised in that the battens (10; 11) are formed in a single piece with the corresponding internal wall.

6. Container according to Claim 5, characterised in that the internal walls are made of polyethylene.

7. Container according to one of the preceding claims, characterised in that the reservoir (9) consists of a metal tank suspended in the upper chamber (3) and whose top face, which is open, is provided with a grille (14).

8. Container according to Claim 7, characterised in that the tank (9) has an open lateral face (15) for loading the refrigerant.

9. Container according to one of the preceding claims, characterised in that the refrigerant is dry ice.

## Patentansprüche

1. Isothermischer Behälter, umfassend ein Gehäuse (1) mit isothermischen Wandungen, welches mittels einer Abschirmung (6) aus thermisch isolierendem Material ein in eine obere, einen Kühlmittelbehälter (9) aufnehmende Kammer (3) und eine untere, eine Ladung (5A, 5B) aufnehmende Kammer (4) unterteiltes Innenvolumen festlegt, wobei die untere (4) und die obere (3) Kammer über einen rund um die Abschirmung angeordneten Durchlaß (7) miteinander in Verbindung stehen, dadurch gekennzeichnet, daß der Behälter eine sich ausgehend vom Umfang der Abschirmung (6) in der unteren Kammer (4) nach unten erstreckende flexible Vorhangstruktur (12) umfaßt.

2. Behälter nach Anspruch 1, dadurch gekennzeichnet, daß die Abschirmung (6) ein plattenförmiges Gebilde ist, welches über seine obenliegende Fläche in der oberen Kammer (3) gehalten wird, und daß die Vorhangstruktur (12) über ihren oberen Teil an den Rändern des plattenförmigen Gebildes (6) befestigt ist.

3. Behälter nach einem der Ansprüche 1 oder 2, dadurch gekennzeichnet, daß die Vorhangstruktur (12) aus einer Vielzahl vertikaler Bänder aus Plastikmäterial besteht.

4. Behälter nach einem der vorangehenden Ansprüche, dadurch gekennzeichnet, daß die Innenwandungen der unteren Kammer (4) eine Reihe paralleler Abstandshalter (10; 11) umfassen, zwischen denen Durchlässe für die Gaszirkulation ausgespart sind.

5. Behälter nach Anspruch 4, dadurch gekennzeichnet, daß die Abstandshalter (10; 11) einstückig mit der entsprechenden Innenwandung ausgebildet sind.

6. Behälter nach Anspruch 5, dadurch gekennzeichnet, daß die Innenwandungen aus Polyäthylen bestehen.

7. Behälter nach einem der vorangehenden Ansprüche, dadurch gekennzeichnet, daß der Behälter (9) durch einen in der oberen Kammer hängenden Metalltrog gebildet wird, dessen obenliegende, offene Seite mit einem Gitter (14) versehen ist.

8. Behälter nach Anspruch 7, dadurch gekennzeichnet, daß der Trog (9) zur Beschickung mit Kühlmittel eine offene Seitenfläche (15) aufweist.

9. Behälter nach einem der vorangehenden Ansprüche, dadurch gekennzeichnet, daß das Kühlmittel Kohlensäureschnee ist.
